# EUROPÄISCHE PATENTANMELDUNG

(11) **EP 4 613 564 A1**
(43) Veröffentlichungstag der Anmeldung: **10.09.2025**
(21) Anmeldenummer: 24196195.2
(22) Anmeldetag: 23.08.2024
(51) Int. Cl.: B60R 16/02, H02G 3/30, H02G 3/32, F16B 11/00

(54) **BEFESTIGUNGSVORRICHTUNG ZUM BEFESTIGEN EINES ERSTEN BAUTEILS AN EINEM ZWEITEN BAUTEIL SOWIE EIN VERFAHREN ZUR HERSTELLUNG EINER SOLCHEN BEFESTIGUNGSVORRICHTUNG**

(30) Priorität: 07.03.2024 EP 24162114
(71) Anmelder: Illinois Tool Works Inc., Glenview IL 60025 (US)
(72) Erfinder: Vollmer, Gerit, Glenview, Illinois, 60025 (US); Müller, Jan, Glenview, Illinois, 60025 (US); Kohler, Jürgen, 88213 Ravensburg (DE)
(74) Vertreter: HGF

(57) **Zusammenfassung**

Erfindungsgemäß ist eine Befestigungsvorrichtung zum Befestigen eines ersten strangartigen bzw. langgestreckten Bauteils mit einem in etwa kreisförmigen Querschnitt an einem zweiten Bauteil, insbesondere zum Befestigen eines Kabels bzw. eines Kabelbaums an einem Trägerbauteil einer Fahrzeugkarosserie eines Kraftfahrzeugs vorzusehen. Diese Befestigungsvorrichtung umfasst
einen Befestigungskörper mit einem Befestigungsmittel zum Verbinden der Befestigungsvorrichtung mit einem zweiten Bauteil, insbesondere einem Trägerbauteil bzw. einer Fahrzeugkarosserie eines Kraftfahrzeugs, und
einen Aufnahmekörper, wobei der Aufnahmekörper einen Aufnahmeabschnitt mit einer in Richtung eines ersten Bauteils weisenden Aufnahmefläche zum Aufnehmen eines ersten Bauteils ausbildet, und wobei auf der Aufnahmefläche des Aufnahmeabschnitts ein Klebemittel angeordnet ist, um ein ersten strangartiges Bauteil, insbesondere ein Kabel bzw. einen Kabelbaum, direkt mittels Kleben mit dem Aufnahmekörper zu verbinden.

## Beschreibung

Die vorliegende Erfindung betrifft eine Befestigungsvorrichtung zum Befestigen eines ersten strangartigen Bauteils mit einem in etwa kreisförmigen Querschnitt an einem zweiten Bauteil, insbesondere zum Befestigen eines Kabels bzw. eines Kabelbaums an einem Trägerbauteil einer Fahrzeugkarosserie eines Kraftfahrzeugs sowie einem Verfahren zur Montage einer solchen Befestigungsvorrichtung.

Ein Kabelbaum ist eine, oft konfektionierte, Bündelung einzelner Leitungen, die Signale (Information) oder Arbeitsströme (Energie) übertragen. Die Leitungen werden als Kabelbaum geführt und ummantelt oder durch Schellen, Kabelbinder, Bindegarn oder Schläuche zusammengehalten.

Derartige Kabelbäume können mittels Kabelbindern mit einer Befestigungsvorrichtung verbunden werden, wobei diese Befestigungsvorrichtung dann mit einer Fahrzeugkarosserie verbunden wird, um den Kabelbaum zu fixieren.

Zudem kann auch vorgesehen sein, dass ein Kabelbaum mittels Klebeband mit einer Befestigungsvorrichtung verbunden wird, wobei die Befestigungsvorrichtung mit einer Fahrzeugkarosserie verbunden wird, um den Kabelbaum zu fixieren.

Eine Aufgabe der vorliegenden Erfindung ist es, eine Befestigungsvorrichtung zum Befestigen eines ersten strangartigen Bauteils mit einem in etwa kreisförmigen Querschnitt an einem zweiten Bauteil, insbesondere zum Befestigen eines Kabels bzw. eines Kabelbaums an einem Trägerbauteil bzw. einer Fahrzeugkarosserie eines Kraftfahrzeugs sowie ein Verfahren zu dessen Montage bereitzustellen, die einfach aufgebaut und sicher und zuverlässig im Betrieb sind.

Eine weitere Aufgabe der vorliegenden Erfindung besteht darin, eine Befestigungsvorrichtung sowie ein Verfahren zur Herstellung einer solchen Befestigungsvorrichtung vorzusehen, die eine einfache und schnelle Montage eines ersten Bauteils an einem zweiten Bauteil ermöglichen.

Zudem besteht eine Aufgabe der vorliegenden Erfindung darin, eine Befestigungsvorrichtung zum Befestigen eines ersten Bauteils an einem zweiten Bauteil sowie ein Verfahren zur Montage einer solchen Befestigungsvorrichtung auszubilden, die eine Alternative zu bekannten Befestigungsvorrichtungen und - verfahren darstellt.

Eine oder mehrere dieser Aufgaben werden durch die Merkmale der unabhängigen Patentansprüche 1, 8, 9 und 10 gelöst. Vorteilhafte Ausgestaltungen sind in den davon abhängigen Unteransprüchen angegeben.

Erfindungsgemäß ist eine Befestigungsvorrichtung zum Befestigen eines ersten strangartigen bzw. langgestreckten Bauteils mit einem in etwa kreisförmigen Querschnitt an einem zweiten Bauteil, insbesondere zum Befestigen eines Kabels bzw. eines Kabelbaums an einem Trägerbauteil einer Fahrzeugkarosserie eines Kraftfahrzeugs vorzusehen. Diese Befestigungsvorrichtung umfasst einen Befestigungskörper mit einem Befestigungsmittel zum Verbinden der Befestigungsvorrichtung mit einem zweiten Bauteil, insbesondere einem Trägerbauteil bzw. einer Fahrzeugkarosserie eines Kraftfahrzeugs, und einen Aufnahmekörper, wobei der Aufnahmekörper einen Aufnahmeabschnitt mit einer in Richtung eines ersten Bauteils weisenden Aufnahmefläche zum Aufnehmen eines ersten Bauteils ausbildet, und wobei auf der Aufnahmefläche des Aufnahmeabschnitts ein Klebemittel angeordnet ist, um ein ersten strangartiges Bauteil, insbesondere ein Kabel bzw. einen Kabelbaum, direkt mittels Kleben mit dem Aufnahmekörper zu verbinden.

Unter einem strangartigen bzw. langgestreckten Bauteil mit einem in etwa kreisförmigen Querschnitt wird im Rahmen der vorliegenden Erfindung insbesondere ein Kabelbaum für ein Kraftfahrzeug verstanden. Die Befestigungsvorrichtung kann aber auch zum Befestigen von Rohren oder Leitungen oder dergleichen ausgebildet sein. Somit kann es sich bei dem langgestreckten Bauteil um ein oder mehrere Kabel oder Litzen, die in Schläuchen angeordnet sind oder mit Klebeband umwickelt sind, handeln.

Die erfindungsgemäße Befestigungsvorrichtung ist als ein einziges Teil bzw. als eine einzige Baugruppe ausgebildet, die unmittelbar bei der Montage von ersten Bauteilen bzw. von Kabelbäumen vorgehalten werden kann, um diese an einer Fahrzeugkarosserie zu befestigen.

Die Befestigungsvorrichtung kann im Rahmen der vorliegenden Erfindung dennoch aus mehreren Bauteilen ausgebildet sein, die jedoch derart zusammengesetzt sind bzw. eine Einheit oder eine Baugruppe ausbilden, dass keine weiteren Verbindungsmittel, insbesondere Klebemittel, notwendig sind, um ein erstes Bauteil an einem zweiten Bauteil zu befestigen. Das bedeutet, die erfindungsgemäße Befestigungsvorrichtung ist frei von zusätzlichen Befestigungsmitteln wie Klebeband oder Kabelbindern bzw. weist kein weiteres separates Befestigungsmittel auf, um ein erstes Bauteil, insbesondere einen Kabelbaum, mit der Befestigungsvorrichtung zu verbinden.

Dementsprechend kann die Befestigungsvorrichtung als ein einziges Bauteil bzw. als eine einzige Baugruppe vorgehalten werden, so dass damit unmittelbar ein erstes Bauteil an einem zweiten Bauteil befestigbar ist, ohne dass weitere technische Mittel notwendig sind. Daher müssen auch keine weiteren Klebe- oder Verbindungsmittel zum Verbinden des ersten Bauteils bzw. eines Kabelbaums mit der Befestigungsvorrichtung vorgesehen werden.

Weiterhin zeichnet sich die vorliegende Erfindung dadurch aus, dass die Befestigungsvorrichtung vollständig als einziges Bauteil oder als Baugruppe und insbesondere automatisiert herstellbar ist.

Somit zeichnet sich die vorliegende Erfindung dadurch aus, dass ein erstes Bauteil unmittelbar bzw. direkt in einem einzigen Arbeitsschritt mit der Befestigungsvorrichtung verbindbar ist und nicht zunächst ein erstes Bauteil auf der Befestigungsvorrichtung angeordnet werden muss und dann in einem zweiten Schritt eine Befestigung dieses ersten Bauteils an der Befestigungsvorrichtung erfolgen muss. Auf diese Weise ist die erfindungsgemäße Befestigungsvorrichtung einfach, sicher und zuverlässig montierbar.

Zudem stellt die Befestigungsvorrichtung eine Alternative zu den aus dem Stand der Technik bekannten Befestigungsvorrichtungen dar.

Der Aufnahmeabschnitt kann sich in einer Längsrichtung erstrecken, die einer Axialrichtung eines aufzunehmenden ersten Bauteils entspricht, und im Querschnitt in etwa rinnenförmig bzw. C-förmig ausgebildet sein.

Durch eine vorbestimmte Erstreckung in Längsrichtung wird eine Haltekraft zwischen der Befestigungsvorrichtung und dem ersten Bauteil mittels einer größeren Aufnahmefläche erhöht.

Der Aufnahmeabschnitt kann eine Länge von zumindest 2cm bzw. 4cm bzw. 5cm bzw. 6cm bzw. 7cm aufweisen. Der Aufnahmeabschnitt kann eine Länge von maximal 8 cm bzw. 10cm bzw. 12cm bzw. 15cm aufweisen

Durch die im Querschnitt in etwa rinnenförmige Ausbildung des Aufnahmeabschnitts ist dieser an eine äußere Geometrie eines aufzunehmenden ersten Bauteils anpassbar bzw. wird die Aufnahmefläche zwischen dem ersten Bauteil und der Befestigungsvorrichtung ebenfalls vergrößert, da ein flächigeres Anliegen des Aufnahmeabschnitts an einem ersten Bauteil möglich ist.

Der Aufnahmeabschnitt kann ein Universalaufnahmeabschnitt zum Aufnehmen von strangartigen Bauteilen mit unterschiedlichem Durchmesser sein, und wobei der Universalaufnahmeabschnitt einen zentralen rinnenförmigen ersten Aufnahmeabschnitt mit einem ersten Radius und einen rinnenförmigen zweiten Aufnahmeabschnitt mit einem zweiten Radius, der größer als der Radius des ersten Aufnahmeabschnitts ist, aufweist, wobei an den beiden sich in Längsrichtung erstreckenden Kanten des ersten rinnenförmigen Aufnahmeabschnitts jeweils ein rinnenförmiger Teilabschnitt des zweiten Aufnahmeabschnitts angeformt ist, wobei diese beiden Teilabschnitte den zweiten Aufnahmeabschnitt ausbilden.

Durch das Vorsehen eines Universalaufnahmeabschnitts mit zumindest einem ersten und einem zweiten Aufnahmeabschnitt ist nur noch eine einzige Befestigungsvorrichtung nötig, um erste Bauteile, insbesondere Kabelbäume mit unterschiedlichem Durchmesser mittels einer einzigen Befestigungsvorrichtung an einem zweiten Bauteil, insbesondere einem Trägerbauteil bzw. einer Karosserie eines Kraftfahrzeugs anzuordnen.

Dadurch dass eine einzige Befestigungsvorrichtung für Kabelbäume mit unterschiedlichem Durchmesser vorgesehen werden kann, werden die Kosten reduziert, da lediglich nur noch eine einzige Art von Befestigungsvorrichtung vorgehalten werden muss.

Weiterhin kann der Universalaufnahmeabschnitt auch drei oder vier oder mehr Aufnahmeabschnitte durch eine entsprechende Segmentierung bzw. Strukturierung des Aufnahmeabschnitts der Befestigungsvorrichtung mit unterschiedlichen Radien und unterschiedlichen Aufnahmeabschnitten vorgesehen werden.

Der Befestigungskörper und der Aufnahmekörper können einstückig miteinander verbunden sein bzw. ein einziges Bauteil ausbilden.

Eine solche Befestigungsvorrichtung ist entsprechend einfach herzustellen.

Eine solche Befestigungsvorrichtung ist insbesondere auch besonders einfach aufgebaut.

Alternativ können der Befestigungskörper und der Aufnahmekörper lösbar, insbesondere wiederlösbar, mittels eines Verbindungsmittels miteinander verbunden und somit modular aufgebaut sein bzw. zwei separate Bauteile ausbilden.

Ein zweiteiliger Aufbau als Baugruppe erleichtert einen schnellen Austausch und ermöglicht bei Reparaturen bzw. Wartungen eine flexiblere Demontage.

Zudem können unterschiedliche Befestigungsmittel am Befestigungskörper und/oder unterschiedliche Aufnahmeabschnitte am Aufnahmekörper vorgesehen werden, was ebenfalls eine hohe Flexibilität in der Nutzung der erfindungsgemäßen Befestigungsvorrichtung ermöglicht.

Als Verbindungsmittel zwischen dem Befestigungskörper und dem Aufnahmekörper können Rastmittel, Clip-Verbindungen, Schraubverbindungen oder Nietverbindungen vorgesehen sein.

Der Aufnahmeabschnitt kann in Längsrichtung flexibel ausgebildet sein.

Der Aufnahmeabschnitt kann sich zusätzlich und/oder alternativ orthogonal zur Längsrichtung erstreckende Filmscharniere aufweisen.

Der Aufnahmekörper kann an seinen seitlichen Randbereichen sich zusätzlich und/oder alternativ orthogonal zur Längsrichtung erstreckende Aussparungen aufweisen.

Auf diese Weise ist der Aufnahmeabschnitt in Längsrichtung derartig segmentiert und/oder flexibel ausgebildet, dass er an eine Krümmung in Axialrichtung eines ersten aufzunehmenden Bauteils anpassbar ist.

Durch die dadurch vergrößerte Verbindungsfläche zwischen dem Aufnahmeabschnitt und einem zu befestigenden ersten Bauteil ist eine größere mit Klebemittel versehene Fläche vorgesehen, so dass erste Bauteile, insbesondere ein Kabelbaum, mit einer höheren Haltekraft gehalten werden können.

Zusätzlich wird die Gefahr vermieden, dass sich ein zu befestigendes Bauteil vom Aufnahmeabschnitt durch eine entsprechende Biegung beispielsweise bei der Montage eines Kabelbaums oder beim Betrieb des Fahrzeugs löst, so dass keine Beschädigungen an der Klebeverbindung zwischen Aufnahmeabschnitt und erstem Bauteil durch Biegung bzw. durch entsprechende Radien hervorgerufen werden können.

Der Befestigungskörper kann in etwa mittig mit dem Aufnahmekörper derart verbunden sein, dass die Befestigungsvorrichtung in etwa T-förmig ausgebildet ist, und, sodass die Aufnahmefläche des Aufnahmekörpers und eine Befestigungsfläche des Befestigungskörpers in entgegengesetzte Richtungen weisen bzw. einander diametral gegenüberliegen.

Das Klebemittel kann beispielsweise ein druckempfindlicher Klebstoff (PSA), ein doppelseitiges Klebeband, ein UV-Klebstoff, Sekundenkleber (Cyanacrylat) oder ein Heißschmelz- (Hotmelt-) Kleber sein.

Hierbei kann eine Haltekraft der Klebeverbindung von bis zu 250 N Haltekraft erreicht werden. Bei höheren Kräften gibt nicht die Klebeverbindung nach, sondern es wird die Reißfestigkeit des Klebebandes erreicht.

Das Befestigungsmittel kann eine Rasteinrichtung oder ein Schraubmittel oder ein Klebemittel sein.

Weiterhin ist erfindungsgemäß ein Verfahren zum Befestigen eines ersten strangartigen bzw. langgestreckten Bauteils mit einem in etwa kreisförmigen Querschnitt an einem zweiten Bauteil, insbesondere zum Befestigen eines Kabels bzw. eines Kabelbaums an einem Trägerbauteil eines Kraftfahrzeugs, mit einer vorstehend beschriebenen Befestigungsvorrichtung vorgesehen. Dieses Verfahren umfasst die folgenden Schritte:
Verkleben eines ersten Bauteils mit einer Aufnahmefläche eines Aufnahmeabschnitts eines Aufnahmekörpers der Befestigungsvorrichtung, und Befestigen eines Befestigungskörpers der Befestigungsvorrichtung an einem zweiten Bauteil, insbesondere mit einem entsprechenden Befestigungsmittel.

Die Vorteile des erfindungsgemäßen Verfahrens entsprechen weitestgehend den vorstehend anhand der erfindungsgemäßen Befestigungsvorrichtung beschriebenen Vorteilen.

Unter einem in etwa kreisförmigen Querschnitt wird insbesondere ein Querschnitt eines Kabelbaums verstanden, wobei sich bei einer entsprechenden Umwicklung von zwei oder mehr Kabeln mittels eines Klebebands oder eines Schlauches oder eines Schrumpfschlauches auch gewellte bzw. nicht exakt kreisrunde Querschnitte ergeben können, die im Rahmen der vorliegenden Erfindung dennoch als in etwa kreisförmig bezeichnet werden.

Zudem ist erfindungsgemäß ein Verfahren zur Herstellung einer vorstehend beschriebenen Befestigungsvorrichtung vorgesehen. Dieses Verfahren umfasst die folgenden Schritte: Herstellen eines Befestigungskörpers und eines Aufnahmekörpers mittels eines 1-Komponenten Spritzgießverfahrens aus einem Kunststoff und
Aufbringen, insbesondere automatisches Aufbringen eines Klebemittels auf eine Aufnahmefläche eines Aufnahmeabschnitts des Aufnahmekörpers.

Die Vorteile des erfindungsgemäßen Verfahrens zur Herstellung der Befestigungsvorrichtung wurden vorstehend anhand der erfindungsgemäßen Befestigungsvorrichtung bereits aufgezeigt. Dieses Verfahren zeichnet sich dennoch insbesondere dadurch aus, dass eine Befestigungsvorrichtung als ein einziges Bauteil bzw. als eine einzige Baugruppe samt Klebemittel zum Verbinden der Befestigungsvorrichtung mit einem ersten Bauteil vorab bzw. in einem oder mehreren Arbeitsgängen herstellbar ist, so dass nicht später bei der Montage eines Kabelbaums ein separates Klebemittel verwendet werden muss, wobei dann ein erstes Bauteil zunächst in einem Aufnahmeabschnitt angeordnet werden muss und dieses anschließend mit dem Aufnahmeabschnitt mittels eines separaten Klebemittels verbunden werden muss.

Im Folgenden werden weitere technische Merkmale der erfindungsgemäßen Befestigungsvorrichtung näherbeschrieben.

Mit der erfindungsgemäßen Befestigungsvorrichtung wird erstmals eine Befestigungsvorrichtung zum Befestigen von strangartigen ersten Bauteilen an einem zweiten Bauteil bereitgestellt, die vollautomatisierbar ist, und zum endgültigen Verbinden des strangartigen ersten Bauteils an der Befestigungsvorrichtung weder ein Klebeband noch einen Kabelbinder benötigt.

Das strangartige Bauteil kann erfindungsgemäß direkt auf den Aufnahmeabschnitt der Befestigungsvorrichtung geklebt werden.

Hierbei ergibt sich zudem der synergistische Effekt, dass auch problemlos strangartige Bauteile mit unterschiedlichen Durchmessern bzw. unterschiedlichem Kabelbaumdurchmesser kein Problem mehr darstellen, da nicht der gesamte Umfang des strangartigen Bauteils umwickelt werden muss.

Als Klebemittel ist insbesondere ein Schmelzklebstoff vorgesehen.

Ein erforderlicher Anpressdruck kann durch ein spezielles Auftragswerkzeug an einer Robotereinrichtung aufgebracht werden.

Als Klebemittel könnten alternativ auch ein UV-Kleber oder ein Sekundenkleber vorgesehen sein. Der Vorteil eines Heißschmelzklebers besteht jedoch darin, dass dieser eine hohe Temperaturbeständigkeit, eine hohe Hydrolysebeständigkeit, eine schnelle Anfangshaftung, eine Beständigkeit gegen Vibration und Chemikalien sowie hohe Haltekräfte ermöglicht.

Bei der Montage von Kabelbäumen wird häufig gefordert, dass diese durch ein voll umfängliches Umwickeln des strangartigen Bauteils mit der Befestigungsvorrichtung verbunden sind. Dies erfordert jedoch einen erhöhten Zeitaufwand bei der Montage.

Weiterhin kann das erfindungsgemäße Verfahren zum Verbinden eines strangartigen Bauteils, insbesondere eines Kabels oder eines Kabelbaums, mit einer Befestigungsvorrichtung, die folgenden Schritte umfassen
Aufnehmen der Befestigungsvorrichtung mittels einer Montagevorrichtung, und Verbinden der Befestigungsvorrichtung mit dem strangartigen Bauteil durch Ausbilden einer Klebeverbindung zwischen dem strangartigen Bauteil und dem Aufnahmekörper der Befestigungsvorrichtung.

Die Erfinder der vorliegenden Erfindung haben erkannt, dass mit dem erfindungsgemäßen Verfahren eine Montage auch ohne Haltebänder bzw. ein entsprechendes Vormontageverfahren möglich ist. Dies ermöglicht eine äußerst kurze Zykluszeit.

Weiterhin kann das Verfahren zum Verbinden eines strangartigen Bauteils, insbesondere eines Kabels oder eines Kabelbaums, mit einer Befestigungsvorrichtung, im Detail die folgenden Schritte umfassen
Aufnehmen der Befestigungsvorrichtung mittels der Montagevorrichtung.

Insbesondere Entnehmen der Befestigungsvorrichtung aus der Bearbeitungsvorrichtung mittels der Montagevorrichtung, die eine in etwa C-förmig ausgebildete Führungseinrichtung und einen damit verbunden Setzkopf aufweist.

Dabei kann die Führungseinrichtung beweglich und der Setzkopf ortsfest ausgebildet sein. Alternativ kann auch die Führungseinrichtung ortsfest und der Setzkopf beweglich ausgebildet sein.

Die Montagevorrichtung kann als ein Roboter ausgebildet sein.

Zum Entnehmen einer Befestigungsvorrichtung aus der Bearbeitungsvorrichtung mittels der als Roboter ausgebildeten Montagevorrichtung kann der Setzkopf zu einer Entnahmeposition im Bereich der Bearbeitungsvorrichtung verfahren, um die Befestigungsvorrichtung aus der Bearbeitungsvorrichtung zu Entnehmen.

Hierbei kann vorgesehen sein, dass der Setzkopf eine Sauger aufweist. Der Setzkopf fährt dann in den Bereich der Bearbeitungsvorrichtung und nimmt die Befestigungsvorrichtung auf.

Die Aufnahme kann insbesondere mittels entsprechender Ansaugteller des Setzkopfes erfolgen, die korrespondierend, vorzugsweise plattenförmig, ausgebildete Saugflächen der Bearbeitungsvorrichtung Ansaugen, um die Befestigungsvorrichtung mittels des Setzkopfes aufzunehmen.

Die Bearbeitungsvorrichtung kann eine Haltevorrichtung, insbesondere einen Greifer aufweisen, um die Befestigungsvorrichtung während der Bearbeitung, insbesondere der Reinigung und dem Aufbringen von Klebemittel zu Fixieren.

Dieses Haltemittel bzw. der Greifer wird geöffnet bzw. gibt die Befestigungsvorrichtung frei, sodass diese von der Montagevorrichtung aus der Befestigungsvorrichtung entnommen werden kann.

Optional kann der Greifer aus der Bearbeitungsvorrichtung derart herausfahren, bspw. nach unten, dass die Montagevorrichtung die Bearbeitungsvorrichtung entnehmen kann.

Dann kann eine Drehung des Setzkopfes um 180° erfolgen.

Anschließend fährt der Roboter mit Setzkopf aus der Bearbeitungsvorrichtung bzw. dem Drehtisch.

Nun kann der Roboter derart positioniert werden, dass ein strangartiges Bauteil in einem Aufnahmeraum der C-förmig ausgebildeten Führungseinrichtung anordbar ist bzw. in diese eingefädelt werden kann und somit eine Einfädelposition einnimmt.

Dann wird der Setzkopf des Roboters entweder durch Bewegung des Setzkopfes und/oder durch Bewegung der Führungseinrichtung derart positioniert, dass ein strangartiges Bauteil im Bereich eines Halteelements des Setzkopfes angeordnet ist.

Daraufhin dreht sich der Setzkopf servogesteuert um einen vorbestimmten Winkelbereich entlang der Führungseinrichtung, bspw. bis zu 180° oder bis zu 60° derart, dass das Haltelement in vertikaler Richtung unterhalb des strangartigen Bauteils und der Setzkopf in vertikaler Richtung oberhalb des strangartigen Bauteils angeordnet ist.

Das Haltelement verfährt dann soweit bis es das strangartige Bauteil kontaktiert.

Im Anschluss daran verfährt die Saugeinrichtung die Befestigungsvorrichtung an das strangartige Bauteil, sodass dieses an das Haltelement gedrückt wird.

Nun kann die Klebeverbindung zwischen dem strangartigen Bauteil und dem Aufnahmekörper der Befestigungsvorrichtung ausgebildet werden.

Dann kann der Setzkopf von der Befestigungsvorrichtung gelöst.

Der Roboter kann danach den Setzkopf vom strangartigen Bauteil und der damit verbundenen Befestigungsvorrichtung entfernen.

Das strangartige Bauteil kann dann über die damit verbunden Befestigungsvorrichtung mit einem Trägerbauteil verbunden werden.

Das vorstehend beschriebene Verfahren zum Befestigen eines ersten strangartigen Bauteils mit einem in etwa kreisförmigen Querschnitt an einem zweiten Bauteil, insbesondere zum Befestigen eines Kabels bzw. eines Kabelbaums an einem Trägerbauteil eines Kraftfahrzeugs, umfasst somit die folgenden Schritte:

Zuführen eines Klebemittels zu einer Aufnahmefläche über einen in die Aufnahmefläche mündenden Klebemittelzuführkanal, und

Verbinden des strangartigen ersten Bauteils mit der Aufnahmefläche des ersten Aufnahmeabschnitts über das Klebemittel.

Weiterhin ist erfindungsgemäß ein Verfahren, insbesondere ein Endmontageverfahren, zum Befestigen einer Befestigungsvorrichtung mit einem damit verbundenen ersten strangartigen Bauteil, insbesondere eines Kabels bzw. eines Kabelbaumes, an einem Trägerbauteil eines Kraftfahrzeugs, mit einer Befestigungsvorrichtung vorgesehen, umfassend den folgenden Schritte

Befestigen eines Befestigungskörpers der Befestigungsvorrichtung an einem zweiten Bauteil/Trägerbauteil.

Zudem kann erfindungsgemäß ein Herstellungsverfahren der erfindungsgemäßen Befestigungsvorrichtung die folgenden Schritte umfassen

Optionale Förderung einer Befestigungsvorrichtung zu einer Bearbeitungsvorrichtung, insbesondere einem Drehtisch,

Reinigen, insbesondere Plasmareinigen, zumindest einer Aufnahmefläche des Aufnahmekörpers der Befestigungsvorrichtung, und

Auftragen von Klebemittel auf eine Aufnahmefläche des Aufnahmefläche des Aufnahmekörpers.

Die vorliegende Erfindung wird im Folgenden anhand eines in den Figuren dargestellten Ausführungsbeispiels näher beschrieben. Diese zeigen in
Figur 1 eine schematische perspektivische Darstellung einer erfindungsgemäßen Befestigungsvorrichtung,
Figur 2 eine schematische perspektivische Darstellung der erfindungsgemäßen Befestigungsvorrichtung mit einem daran befestigten ersten Bauteil,
Figur 3 eine schematische seitlich geschnittene Darstellung der erfindungsgemäßen Befestigungsvorrichtung mit einem daran befestigten ersten Bauteil mit größerem Durchmesser,
Figur 4 eine schematische seitlich geschnittene Darstellung der erfindungsgemäßen Befestigungsvorrichtung mit einem daran befestigten ersten Bauteil mit kleinerem Durchmesser,
Figur 5 eine schematische Seitenansicht einer erfindungsgemäßen Montagevorrichtung zum Verbinden einer erfindungsgemäßen Befestigungsvorrichtung mit einem strangartigen Bauteil in einer Ausgangsstellung,
Figur 6 eine schematische Seitenansicht der erfindungsgemäßen Montagevorrichtung mit einer Befestigungsvorrichtung,
Figur 7eine schematische perspektivische Darstellung eines Setzkopfes der Montagevorrichtung unmittelbar vor dem Aufnehmen der erfindungsgemäßen Befestigungsvorrichtung,
Figur 8 eine schematische perspektivische Darstellung des Setzkopfes während des Aufnehmens der erfindungsgemäßen Befestigungsvorrichtung,
Figur 9eine schematische perspektivische Darstellung der Montagevorrichtung mit aufgenommener Befestigungsvorrichtung,
Figur 10 eine schematische perspektivische Darstellung der Montagevorrichtung mit aufgenommener Befestigungsvorrichtung um 60° gedreht, vor der Aufnahme eines strangartigen Bauteils,
Figur 11 eine schematische perspektivische Darstellung der Montagevorrichtung mit aufgenommener Befestigungsvorrichtung, beir der Aufnahme eines strangartigen Bauteils,
Figur 12 eine weitere schematische perspektivische Darstellung der Montagevorrichtung mit aufgenommener Befestigungsvorrichtung um weitere 60° gedreht, vor der Aufnahme eines strangartigen Bauteils,
Figur 13 eine schematische Seitenansicht der Darstellung aus Figur 12,
Figur 14 eine weitere schematische Seitenansicht eines Setzkopfes der Montagevorrichtung vor dem Verbinden mit einem strangartigen Bauteil,
Figur 15 eine schematische Detailansicht des Setzkopfes beim Verbinden der Befestigungsvorrichtung mit dem strangartigen Bauteil,
Figur 16 eine schematische Detailansicht des Setzkopfes beim Freigeben von der Befestigungsvorrichtung und dem damit verbundenen strangartigen Bauteil, und
Figur 17 eine schematische Seitenansicht des strangartigen Bauteils mit damit verbundener Befestigungsvorrichtung in einem von dem Setzkopf freigegebenen Zustand.

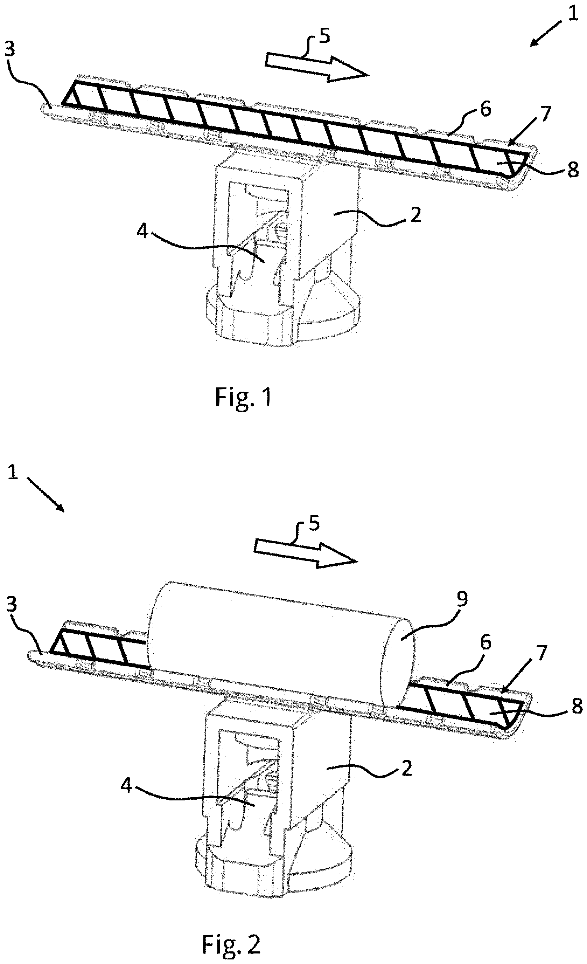

Eine Befestigungsvorrichtung 1 zum Befestigen eines ersten strangartigen bzw. langgestreckten Bauteils 9 mit einem in etwa kreisförmigen Querschnitt an einem zweiten Bauteil, insbesondere zum Befestigen eines Kabels bzw. eines Kabelbaums an einem Trägerbauteil bzw. einer Fahrzeugkarosserie eines Kraftfahrzeugs, umfasst einen Befestigungskörper 2 und einen Aufnahmekörper 3 (Figuren 1 bis 5).

Die Befestigungsvorrichtung 1 kann in etwa T-förmig ausgebildet sein. Die Befestigungsvorrichtung 1 kann jedoch auch eine andere geeignete Form wie die beispielhaft anhand des einzigen Ausführungsbeispiels beschriebene Form aufweisen.

Der Befestigungskörper 2 weist an seinem freien Ende ein Befestigungsmittel 4 auf. Das Befestigungsmittel 4 ist im vorliegenden Ausführungsbeispiel eine Bolzenbefestigung (stud retainer).

Das Befestigungsmittel 4 kann jedoch auch als ein anderes Befestigungsmittel ausgebildet sein, welches nicht zum Befestigen der Befestigungsvorrichtung 1 an einem Bolzen eines Trägerbauteils ausgebildet ist, wie beispielsweise eine entsprechende Rasteinrichtung, eine Schraubverbindung, eine Nietverbindung oder eine andere geeignete Verbindung.

Vorzugsweise sind folgende Befestigungsmittel vorgesehen:
1) Blindlochbefestigung mit Metallklammer
2) Befestigung auf einer Kante mit einem Kanten- oder Edgeclip
3) Cliplösung in ein Loch (z.B. mit Tannenbaumfuß)
4) Befestigung auf Bolzen mit einer Bolzenaufnahme (siehe Figuren)

Eine Entsprechende Haltekraft beträgt in etwa 150 N.

Der Aufnahmekörper 3 ist gemäß diesem Ausführungsbeispiel einstückig mit dem Befestigungskörper 2 verbunden, so dass diese als ein einziges Bauteil ausgebildet sind. Der Befestigungskörper 2 und der Aufnahmekörper 3 können insbesondere mittels eines 1-Komponenten Spritzgießverfahrens aus einem Kunststoff hergestellt sein.

Gemäß einem alternativen nicht dargestellten Ausführungsbeispiel sind der Befestigungskörper 2 und der Aufnahmekörper 3 als zwei separate bzw. einzelne Bauteile ausgebildet, die mittels eines entsprechenden Verbindungsmittels miteinander verbindbar sind.

Als Verbindungsmittel kann hierbei vorzugsweise ein Rastmittel bzw. eine Clip-Verbindung oder auch eine Schraubverbindung oder dergleichen vorgesehen sein.

Der Befestigungskörper 2 weist einen langgestreckten sich in einer Längsrichtung 5 erstreckenden Aufnahmeabschnitt 6 auf.

Die Längsrichtung 5 entspricht einer Axialrichtung eines aufzunehmenden ersten strangartigen bzw. langgestreckten Bauteils 9 bzw. eines Kabelbaums.

Der Aufnahmeabschnitt 6 ist im vorliegenden Ausführungsbeispiel in einem Querschnitt orthogonal zur Längsrichtung 5 in etwa rinnen- bzw. C-förmig ausgebildet.

Eine vom freien Ende des Befestigungskörpers 2 bzw. des Befestigungsmittels 4 weg weisende Fläche des Aufnahmeabschnitts 6 wird als Aufnahmefläche 7 bezeichnet. Die Aufnahmefläche 7 weist somit in Richtung eines aufzunehmenden ersten Bauteils bzw. eines Kabelbaums.

Auf der Aufnahmefläche 7 ist vorzugsweise vollflächig oder nahezu vollflächig ein Klebemittel 8 aufgebracht.

Unter dem Ausdruck "vollflächig" bzw. "nahezu vollflächig" wird im Rahmen der vorliegenden Erfindung verstanden, dass in etwa 70 % bzw. in etwa 80 % bzw. in etwa 90 % bzw. in etwa 95 % bzw. in etwa 100 % der Aufnahmefläche 7 mit einem Klebemittel 8 versehen sind bzw. das Klebemittel 8 auf der Aufnahmefläche angeordnet ist.

Der Befestigungskörper 2 und der Aufnahmekörper 3 können aus einem Kunststoff, wie z.B. PA66, PA6 oder POM ausgebildet sein. Bevorzugt ist PA66 vorgesehen.

Das Klebemittel 8 kann beispielsweise ein druckempfindlicher Klebstoff (PSA), ein doppelseitiges Klebeband, ein UV-Klebstoff, Sekundenkleber (Cyanacrylat) oder ein Heißschmelz-(Hotmelt-) Kleber sein.

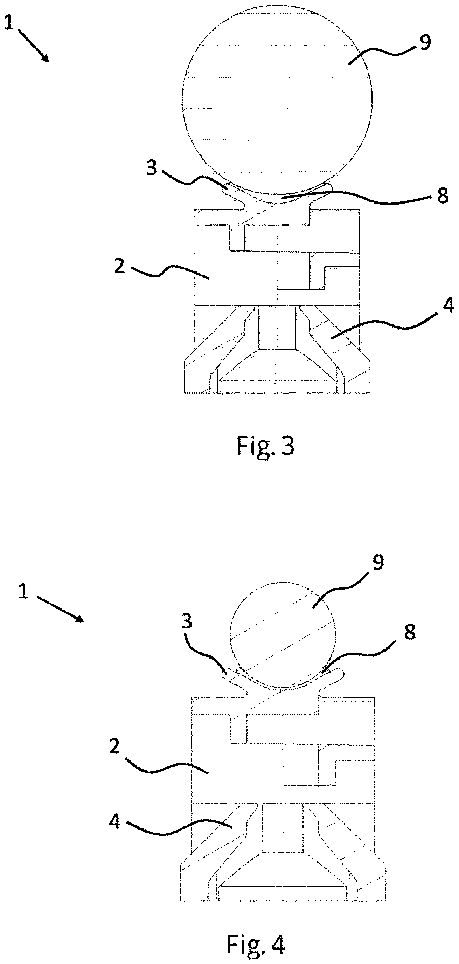

Der Aufnahmeabschnitt 6 kann zum Aufnehmen von strangartigen ersten Bauteilen 9 mit unterschiedlichen Durchmessern ausgebildet sein (Figuren 3 und 4).

Gemäß einer weiteren nicht dargestellten Weiterbildung der erfindungsgemäßen Befestigungsvorrichtung kann der Aufnahmeabschnitt 6 ein Universalaufnahmeabschnitt zum Aufnehmen von strangartigen ersten Bauteilen 9 mit unterschiedlichen Durchmessern sein (nicht dargestellt).

Dabei ist dann vorgesehen, dass der Universalaufnahmeabschnitt einen zentralen rinnenförmigen ersten Aufnahmeabschnitt 6 mit einem ersten Radius aufweist. An seitlichen Kanten dieses ersten Aufnahmeabschnitts 6, die sich in Längsrichtung 5 erstrecken, sind dann jeweils zwei ebenfalls in etwa rinnenförmig ausgebildete Teilabschnitte angeformt, die den zweiten Aufnahmeabschnitt 6 ausbilden.

Hierbei könnte auch vorgesehen sein, dass auf dieselbe Weise, wie sich der zweite Aufnahmeabschnitt 6 an den ersten Aufnahmeabschnitt 6 anschließt, auch noch weitere dritte oder vierte Aufnahmeabschnitte vorgesehen sind.

Die beiden Teilabschnitte bilden dann den zweiten Aufnahmeabschnitt 6 aus, der einen größeren Radius aufweist als der erste Aufnahmeabschnitt 6.

Insbesondere ist der Aufnahmeabschnitt 6 in Längsrichtung 5 flexibel ausgebildet.

Gemäß dem vorliegenden Ausführungsbeispiel weisen die sich in Längsrichtung 5 erstreckenden freien Kanten des Aufnahmeabschnitts 6 sich orthogonal zur Längsrichtung 5 erstreckende Aussparungen bzw. Kerben auf, die den Aufnahmeabschnitt 6 derart segmentieren, dass dieser in Längsrichtung 5 flexibel ausgebildet ist.

Zusätzlich und/oder alternativ können auch sich orthogonal zur Längsrichtung 5 erstreckende Filmscharniere im Aufnahmeabschnitt 6 vorgesehen sein.

Weiterhin ist erfindungsgemäß ein Verfahren zum Befestigen eines ersten strangartigen bzw. langgestreckten Bauteils 9 mit einem in etwa kreisförmigen Querschnitt an einem zweiten Bauteil, insbesondere zum Befestigen eines Kabels bzw. eines Kabelbaums an einem Trägerbauteil eines Kraftfahrzeugs, mit einer vorstehend beschriebenen Befestigungsvorrichtung 1 vorgesehen. Dieses Verfahren umfasst die folgenden Schritte:
Verkleben eines ersten Bauteils 9 mit einer Aufnahmefläche 7 eines Aufnahmeabschnitts 6 eines Aufnahmekörpers 3 der Befestigungsvorrichtung 1, und Befestigen eines Befestigungskörpers 2 der Befestigungsvorrichtung 1 an einem zweiten Bauteil, insbesondere mit einem entsprechenden Befestigungsmittel.

Insbesondere ist erfindungsgemäß ein Verfahren zur Herstellung einer vorstehend beschriebenen Befestigungsvorrichtung 1 vorgesehen. Dieses Verfahren umfasst die folgenden Schritte:
Herstellen eines Befestigungskörpers 2 und eines Aufnahmekörpers 3 mittels eines 1-Komponenten Spritzgießverfahrens aus einem Kunststoff und
Aufbringen, insbesondere automatisches Aufbringen eines Klebemittels 8 auf eine Aufnahmefläche 7 eines Aufnahmeabschnitts 6 des Aufnahmekörpers 3.

Weiterhin ist erfindungsgemäß ein Herstellungsverfahren der erfindungsgemäßen Befestigungsvorrichtung vorgesehen, dass die folgenden Schritte umfasst
Optionale Förderung einer Befestigungsvorrichtung zu einer Bearbeitungsvorrichtung, insbesondere einem Drehtisch,

Reinigen, insbesondere Plasmareinigen, zumindest einer Aufnahmefläche des Aufnahmekörpers der Befestigungsvorrichtung, und
Auftragen von Klebemittel auf eine Aufnahmefläche des Aufnahmefläche des Aufnahmekörpers.

Weiterhin umfasst das Verfahren zum Verbinden eines strangartigen Bauteils, insbesondere eines Kabels oder eines Kabelbaums, mit einer Befestigungsvorrichtung, im Detail die folgenden Schritte.

Aufnehmen der Befestigungsvorrichtung mittels der Montagevorrichtung 10.

Insbesondere Entnehmen der Befestigungsvorrichtung aus der Bearbeitungsvorrichtung (nicht dargestellt) mittels der Montagevorrichtung 10, die eine in etwa C-förmig ausgebildete Führungseinrichtung 11 und einen damit verbunden Setzkopf aufweist.

Dabei kann die Führungseinrichtung 11 beweglich und der Setzkopf ortsfest ausgebildet sein. Alternativ kann auch die Führungseinrichtung 11 ortsfest und der Setzkopf beweglich ausgebildet sein.

Die Montagevorrichtung 10 kann als ein Roboter ausgebildet sein.

Zum Entnehmen einer Befestigungsvorrichtung aus der Bearbeitungsvorrichtung mittels der als Roboter ausgebildeten Montagevorrichtung 10 wird der Setzkopf zu einer Entnahmeposition im Bereich der Bearbeitungsvorrichtung verfahren, um die Befestigungsvorrichtung aus der Bearbeitungsvorrichtung zu Entnehmen.

Hierbei ist vorgesehen, dass der Setzkopf eine Sauger 14 oder andere geeignete Aufnahmemittel aufweist. Der Setzkopf fährt dann in den Bereich der Bearbeitungsvorrichtung und nimmt die Befestigungsvorrichtung auf.

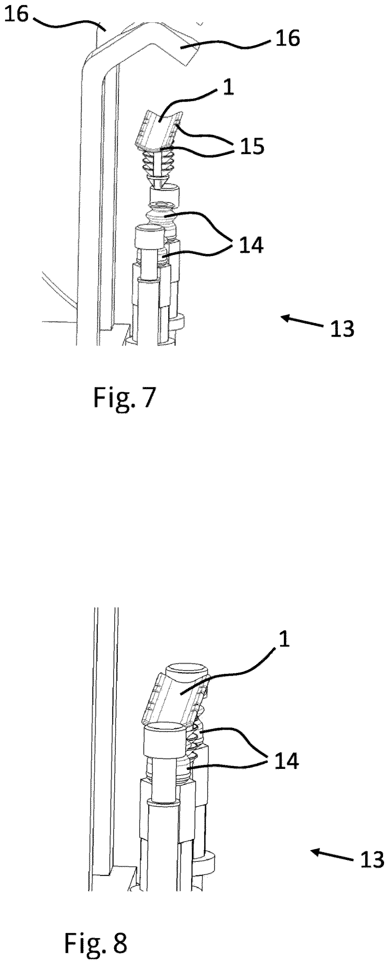

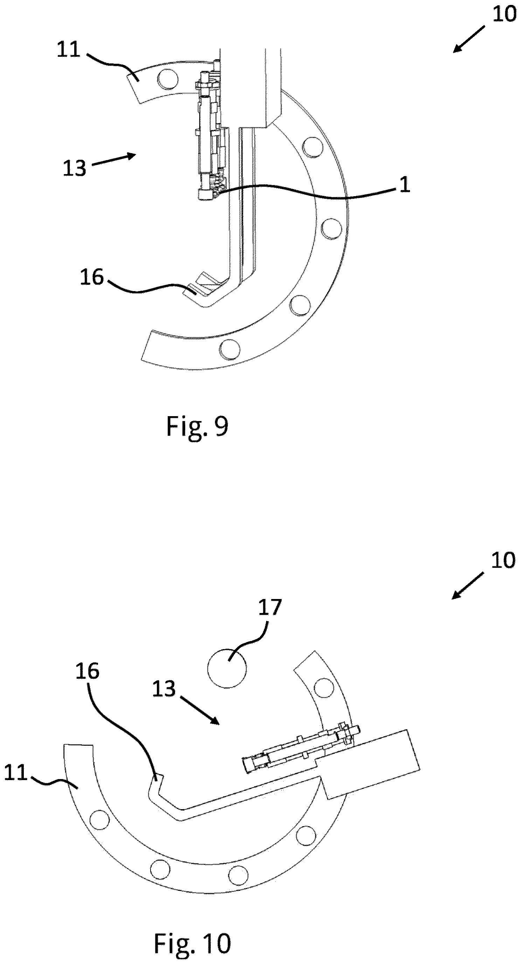

Die Aufnahme erfolgt insbesondere mittels entsprechender Ansaugteller des Setzkopfes 13, die korrespondierend, vorzugsweise plattenförmig, ausgebildete Saugflächen 15 der Bearbeitungsvorrichtung Ansaugen, um die Befestigungsvorrichtung mittels des Setzkopfes 13 aufzunehmen (Figuren 8 und 9).

Die Bearbeitungsvorrichtung weist eine Haltevorrichtung, insbesondere einen Greifer (nicht dargestellt) auf, um die Befestigungsvorrichtung während der Bearbeitung, insbesondere der Reinigung und dem Aufbringen von Klebemittel zu Fixieren.

Dieses Haltemittel bzw. der Greifer wird geöffnet bzw. gibt die Befestigungsvorrichtung frei, sodass diese von der Montagevorrichtung 10 aus der Befestigungsvorrichtung entnommen werden kann.

Optional kann der Greifer aus der Bearbeitungsvorrichtung derart herausfahren, bspw. nach unten, dass die Montagevorrichtung 10 die Bearbeitungsvorrichtung entnehmen kann.

Dann erfolgt eine Drehung des Setzkopfes 13 um 180°.

Anschließend fährt der Roboter mit Setzkopf 13 aus der Bearbeitungsvorrichtung bzw. dem Drehtisch (nicht dargestellt).

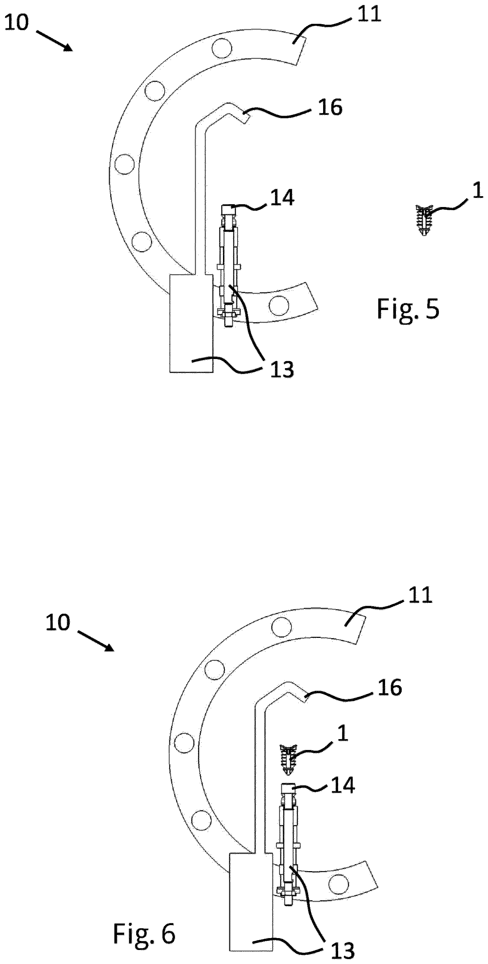

Nun wird die Montagevorrichtung 10 bzw. der Roboter derart positioniert, dass ein strangartiges Bauteil 17 in einem Aufnahmeraum der C-förmig ausgebildeten Führungseinrichtung 11 anordbar ist bzw. in diese eingefädelt werden kann und somit eine Einfädelposition einnimmt (Figur 6).

Dann wird der Setzkopf des Roboters entweder durch Bewegung des Setzkopfes 13 und/oder durch Bewegung der Führungseinrichtung 11 derart positioniert, dass ein strangartiges Bauteil 17 im Bereich eines Halteelements des Setzkopfes angeordnet ist (Figuren 7, 8 und 9).

Daraufhin dreht sich der Setzkopf 13 servogesteuert um einen vorbestimmten Winkelbereich entlang der Führungseinrichtung 11, bspw. bis zu 180° oder bis zu 60° derart, dass das Haltelement 16 in vertikaler Richtung unterhalb des strangartigen Bauteils 17 und der Setzkopf 13 in vertikaler Richtung oberhalb des strangartigen Bauteils 17 angeordnet ist.

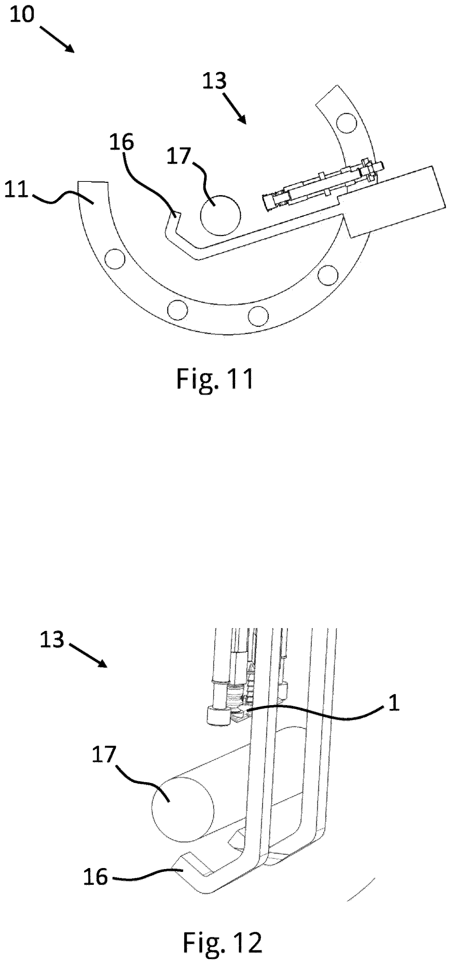

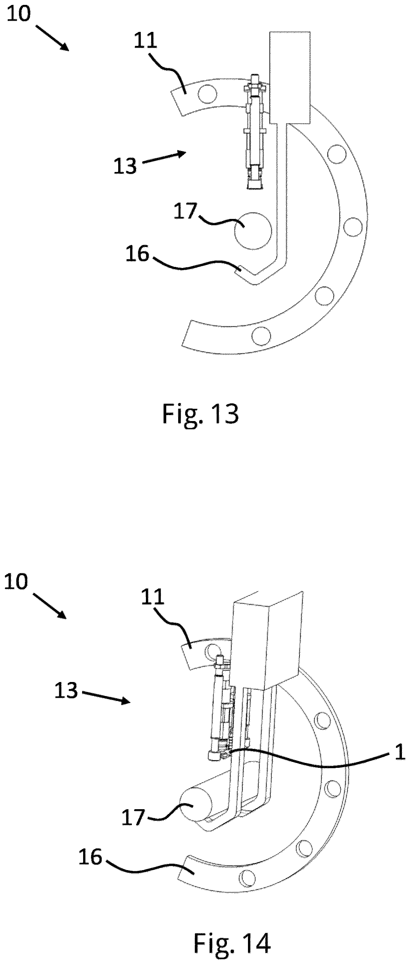

Das Haltelement 16 verfährt dann soweit bis es das strangartige Bauteil kontaktiert (Figuren 11 bis 16).

Im Anschluss daran verfährt die Saugeinrichtung die Befestigungsvorrichtung an das strangartige Bauteil 17, sodass dieses an das Haltelement 16 gedrückt wird.

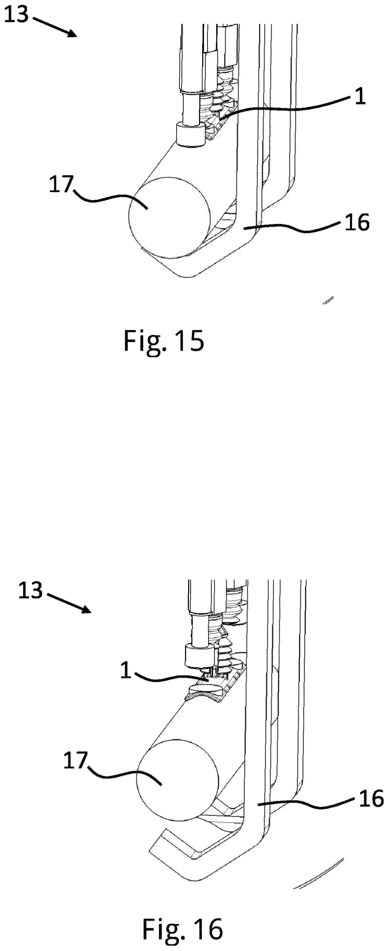

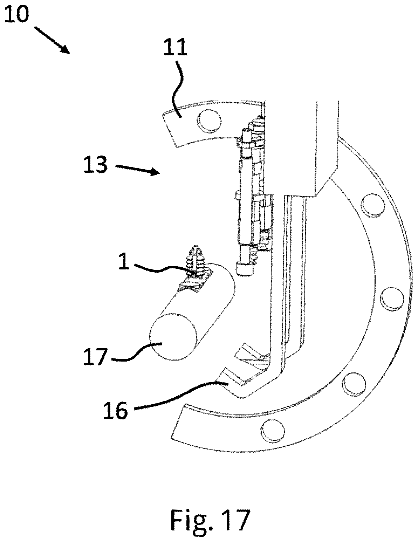

Anschließend kann die Klebeverbindung zwischen dem strangartigen Bauteil 17 und dem Aufnahmekörper 3 der Befestigungsvorrichtung 1 ausgebildet werden (Figuren 16 und 17).

Dann wird der Setzkopf 13 von der Befestigungsvorrichtung gelöst.

Der Roboter entfernt danach den Setzkopf 13 vom strangartigen Bauteil und der damit verbundenen Befestigungsvorrichtung (Figur 18).

Das strangartige Bauteil 17 wird dann über die damit verbundene Befestigungsvorrichtung mit 1 einem Trägerbauteil bzw. zweiten Bauteil (nicht dargestellt) verbunden.

Weiterhin ist erfindungsgemäß ein Verfahren, insbesondere ein Endmontageverfahren, zum Befestigen einer Befestigungsvorrichtung mit einem damit verbundenen ersten strangartigen Bauteil, insbesondere eines Kabels bzw. eines Kabelbaumes, an einem Trägerbauteil eines Kraftfahrzeugs, mit einer Befestigungsvorrichtung vorgesehen, umfassend den folgenden Schritte

Befestigen eines Befestigungskörpers der Befestigungsvorrichtung an einem zweiten Bauteil/Trägerbauteil.

### Bezuaszeichenliste

- 1: Befestigungsvorrichtung
- 2: Befestigungskörper
- 3: Aufnahmekörper
- 4: Befestigungsmittel
- 5: Längsrichtung
- 6: Aufnahmeabschnitt
- 7: Aufnahmefläche
- 8: Klebemittel
- 9: erstes Bauteil
- 10: Montagevorrichtung
- 11: Führungseinrichtung
- 12 13: Setzkopf
- 14: Sauger
- 15: Saugflächen
- 16: Haltelement
- 17: strangartiges Bauteil

## Patentansprüche

1. Befestigungsvorrichtung (1) zum Befestigen eines ersten strangartigen Bauteils (9) mit einem in etwa kreisförmigem Querschnitt an einem zweiten Bauteil, insbesondere zum Befestigen eines Kabels bzw. eines Kabelbaumes an einem Trägerbauteil eines Kraftfahrzeugs, umfassend
einen Befestigungskörper (2) mit einem Befestigungsmittel (4) zum Verbinden der Befestigungsvorrichtung (1) mit einem zweiten Bauteil, insbesondere einem Trägerbauteil eines Kraftfahrzeugs, und
einen Aufnahmekörper (3), wobei der Aufnahmekörper (3) einen Aufnahmeabschnitt (6) mit einer in Richtung eines ersten Bauteils weisenden Aufnahmefläche (7) zum Aufnehmen eines ersten Bauteils ausbildet, und wobei auf der Aufnahmefläche (7) des Aufnahmeabschnitts (6) ein Klebemittel (8) angeordnet ist oder anordbar ist, um ein erstes strangartiges Bauteil (17), insbesondere ein Kabel bzw. einen Kabelbaum, mittels Kleben mit dem Aufnahmekörper (3) zu verbinden.

2. Befestigungsvorrichtung (1) gemäß Anspruch 1,
**dadurch gekennzeichnet,**
**dass** der Aufnahmeabschnitt (6) sich in einer Längsrichtung (5) erstreckt, die einer Axialrichtung eines aufzunehmenden ersten Bauteils entspricht, und im Querschnitt in etwa rinnenförmig (bzw. C-förmig) ausgebildet ist.

3. Befestigungsvorrichtung (1) gemäß Anspruch 1 oder 2,
**dadurch gekennzeichnet,**
**dass** der Aufnahmeabschnitt (6) sich in einer Längsrichtung (5) erstreckt, die einer Axialrichtung eines aufzunehmenden ersten Bauteils entspricht, und im Querschnitt in etwa rinnenförmig ausgebildet ist.

4. Befestigungsvorrichtung (1) gemäß einem der Ansprüche 1 bis 3,
**dadurch gekennzeichnet,**
**dass** der Befestigungskörper (2) und der Aufnahmekörper (3) einstückig miteinander verbunden sind oder das
**dass** der Befestigungskörper (2) und der Aufnahmekörper (3) lösbar, insbesondere wiederlösbar, mittels eine Verbindungsmittels miteinander verbunden und somit modular aufgebaut sind.

5. Befestigungsvorrichtung (1) gemäß einem der Ansprüche 1 bis 4,
**dadurch gekennzeichnet,**
**dass** der Aufnahmeabschnitt (6) in Längsrichtung (5) flexibel ausgebildet ist, und/oder dass der Aufnahmeabschnitt (6) sich orthogonal zur Längsrichtung (5) erstreckende Filmscharniere aufweist und/oder
**dass** der Aufnahmeabschnitt (6) an seinen seitlichen Randbereichen sich orthogonal zur Längsrichtung (5) erstreckende Aussparungen aufweist,
sodass der Aufnahmeabschnitt (6) in Längsrichtung (5) derart segmentiert und/oder flexibel ausgebildet ist, dass er an eine Krümmung in Axialrichtung eines ersten aufzunehmenden Bauteils (9) anpassbar ist.

6. Befestigungsvorrichtung (1) gemäß einem der Ansprüche 1 bis 5,
**dadurch gekennzeichnet,**
**dass** das Klebemittel (8) wie z.B. ein druckempfindlicher Klebstoff (PSA), ein doppelseitiges Klebeband, ein UV-Klebstoff, Sekundenkleber (Cyanacrylat) oder ein Heißschmelz- (Hotmelt-) Kleber ist.

7. Verfahren zum Verbinden eines strangartigen Bauteils, insbesondere eines Kabels oder eines Kabelbaums, mit einer Befestigungsvorrichtung, umfassend die folgenden Schritte Aufnehmen der Befestigungsvorrichtung mittels einer Montagevorrichtung (10), und Verbinden der Befestigungsvorrichtung mit dem strangartigen Bauteil durch Ausbilden einer Klebeverbindung zwischen dem strangartigen Bauteil (17) und dem Aufnahmekörper (3) der Befestigungsvorrichtung.

8. Verfahren insbesondere gemäß Anspruch 7 zum Befestigen einer Befestigungsvorrichtung (1) gemäß einem der Ansprüche 1 bis 6, mit einem damit verbundenen ersten strangartigen Bauteil (9), insbesondere eines Kabels bzw. eines Kabelbaumes, an einem Trägerbauteil eines Kraftfahrzeugs, umfassend den folgenden Schritte
Befestigen eines Befestigungskörpers (2) der Befestigungsvorrichtung (1) an einem zweiten Bauteil/Trägerbauteil.

9. Verfahren zur Herstellung einer Befestigungsvorrichtung (1) gemäß einem der Ansprüche 1 bis 6, umfassend die folgenden Schritte
Herstellen eines Befestigungskörpers (2) und eines Aufnahmekörpers (3) mittels eines 1-Komponenten Spritzgießverfahrens aus einem Kunststoff, und
Aufbringen, insbesondere automatisches Aufbringen, eines Klebemittel (8) auf eine Aufnahmefläche (7) eines Aufnahmeabschnitts (6) des Aufnahmekörpers (3).
